# EUROPEAN PATENT APPLICATION

(11) **EP 1 640 426 A2**
(43) Date of publication of application: **29.03.2006**
(21) Application number: 05255045.6
(22) Date of filing: 16.08.2005
(51) Int. Cl.: C09J 7/02, C09J 11/04, C08J 7/04

(54) **Heat-resistant label**

(30) Priority: 24.09.2004 US 948907
(71) Applicant: Brady Worldwide, Inc., Milwaukee, Wisconsin 53223 (US)
(72) Inventor: Yang, Huimin, Glendale, WI 53209 (US)
(74) Representative: Draper, Martyn John

(57) **Abstract**

Sheet materials, labels fabricated from the sheet materials, and methods of fabricating the sheet material and forming the labels are provided. The sheet material for the label is composed of a heat-resistant base layer sandwiched between a heat-decomposable ink-receptive layer and a heat-decomposable pressure-sensitive adhesive (PSA) layer, with the surface of the ink-receptive layer and the exposed surface of the adhesive layer preferably covered with a release film. A heat-resistant marking such as an inked pattern can be applied to the surface of the ink-receptive layer, for example, using a carbon black thermal transfer ribbon. Upon heating the sheet material attached to an object at a temperature of about 300°C or greater, a burned pattern is obtained that is composed of the inorganic base sheet and the marking fused as a single body and bonded to the object. The burned-on label can be used, for example, as an identification label and a decorative design, among other applications.

## Description

The invention relates generally to sheet materials for labels, and more particularly to sheet materials that can be applied to objects and processed at high temperatures of about 400°C and greater, to form a label that serves for identification or decoration of the object.

There is a continuous need to improve process control, inventory control, and quality control in the implementation of in-process barcode systems and other labeling systems. It is a challenge to fabricate a barcode label that is able to survive high temperature processing conditions such as those conducted at temperatures of 400°C and higher. As an example, a barcode label applied onto a television picture tube (CRT) must be readable with a scanner after being processed through acid cleaning and then baking at temperatures greater than 400°C.

Green ceramic sheets have been used as label materials since early 1990. U.S. Patent No. 4,971,858 (Yamano), No. 5,204,163 (Nakatsuka), and No. 5,209,796 (Sakuramoto) describe green ceramic sheets composed of a base layer and pressure-sensitive adhesive (PSA) protected with a release film. The base layer is fabricated from glass frit and one or more binder resins such as silicone resin. A label made from such a sheet can be applied onto an object, which is then subjected to a high temperature, whereby the binder resin decomposes and the glass frit melts, causing pigment in the base layer to adhere to the object. U.S. Patent No. 5,506,016 (Onodera), No. 5,578,365 (Kume), and No. 6,416,845 (Kume) also describe a green ceramic sheet formed from a base layer and a PSA layer, but rather than using glass frit in the base layer, a silicone resin and/or rubber are included to hold the pigments on the object during and after the high temperature process. Yet another green ceramic sheet is described in U.S. Patent No. 5,780,142 (Kume) having a base layer of acrylic resin and glass frit, and an overlying silicone resin layer bearing an inked image thereon.

A drawback of currently available labels is the use of glass frits due to their toxicity, particularly low melting point glass frits, which contain lead. Another drawback of current label materials is the inclusion of a silicone resin as a binder or ink-receptive layer, which can result in poor printability and, accordingly, narrow the selection of ribbons. A further disadvantage is the low mechanical strength of present labels, which are too weak to be lifted and not re-workable once they are applied to a substrate, but before being melted and fused.

It would be desirable to provide an improved, heat-resistant identifying label that overcomes such problems.

The present invention provides a flexible sheet material for high temperature-resistant labels.

In one aspect, the invention provides a sheet material for a label. The sheet material (printing sheet) is composed of a heat-resistant or non-thermally (non-heat) decomposable base layer, a heat- or thermally-decomposable ink-receptive layer over one surface of the base layer, and a heat-decomposable pressure-sensitive adhesive layer over an opposing surface of the base layer. A release layer can be applied to cover the exposed surface of the pressure-sensitive adhesive layer. The base layer comprises fiberglass or other reinforcing material, silicone resin, and inorganic particles. The ink-receptive layer bears a heat-resistant pattern, which can be formed, for example, from a heat-resistant ink. In a preferred embodiment, the sheet material comprises a transfer pattern made of an ink containing an inorganic colorant formed on the ink-receptive layer of the sheet. Preferably, the ink-receptive layer and adhesive layer comprise thermally decomposable organic material such that the layers burn off (decompose away) when the sheet material is heated at a temperature greater than about 300°C.

In an embodiment of the sheet material, acrylic-based polymers are used for both the ink-receptive layer and the PSA layer, and the base layer is composed of glass fiber (e.g., woven fiberglass cloth), which has been saturated with a composition comprising a silicone resin and inorganic particles, dried, and cured. Both the ink-receptive layer and the PSA layer of the label are composed of acrylic-based polymers that decompose and bum off cleanly at temperatures greater than about 300°C, and leave substantially no carbonized residue after the sheet material is heat treated, while the base layer of the label becomes fused onto an object being marked, with the pattern or image being fused onto the upper (outer) surface of the base layer.

In yet another aspect, the invention provides a process of fabricating a sheet material for use as a label. In one embodiment, the process comprises the steps of applying a heat-decomposable ink-receptive layer onto a surface of a base layer comprising a reinforcing material layer, silicone resins, and inorganic particles; and applying a heat-decomposable adhesive layer to an opposing surface of the base layer. Optionally, but desirably, a releasable sheet is applied to the exposed surface of the adhesive layer for protection. The process can further include applying a heat-resistant marking onto the upper surface of the ink-receptive layer.

Another aspect of the invention is a method of producing a pattern on a substrate (e.g., an object). In one embodiment, the method comprises the steps of adhering a sheet material according to the invention to the substrate via a pressure-sensitive adhesive layer on the sheet material and heating the sheet material and the substrate such that the ink-receptive layer and the adhesive layer decompose and the base layer and overlying marking or pattern are adhered to the substrate. Preferably, the sheet material and substrate are heated at a temperature greater than about 300°C to about 500°C. It is also preferred that substantially no carbonized residue of the ink-receptive layer and the adhesive layer remains after the heating step.

Advantageously, the present sheet composition eliminates the need for the incorporation of glass frits into the base layer of a sheet material, and the use of a silicone ink-receptive coating as required in conventional structures. Other advantages of the present sheet material and process include dimensional stability and high strength due, at least in part, to the reinforcement by the glass fiber, making the heat-resistant label of the invention easily processed. For example, the present label can be easily processed during die-cutting when waste material must be continuously stripped off without breaking. In addition, the label possesses a high amount of strength, allowing it to be peeled off and re-worked (re-positioned) on a substrate to be labeled.

Preferred embodiments of the invention are described below with reference to the following accompanying drawings, which are for illustrative purposes only. Throughout the following views, the reference numerals will be used in the drawings, and the same reference numerals will be used throughout the several views and in the description to indicate same or like parts.
**FIG. 1** is a diagrammatic cross-sectional view of a sheet material for a label according to an embodiment of the invention.
**FIGS. 2A-2D** are diagrammatic cross-sectional views of sequential processing steps in forming the sheet material of **FIG. 1**, according to an embodiment of the invention.
**FIGS. 3-4** depict sequential processing steps for labeling an object using the sheet material of **FIG. 1**, showing the sheet material initially attached to an object, and then processed to form a label with a pattern affixed onto the object.

The invention will be described generally with reference to the drawings for the purpose of illustrating the present preferred embodiments only and not for purposes of limiting the same.

The present invention provides a strong sheet material for high temperature-resistant labels that do not tear during die-cutting or when reworking is required, and can withstand high temperatures of up to about 500°C. The sheet material comprises an ink-receptive layer bearing an image situated on one side of the base layer, and a pressure-sensitive adhesive layer situated on the opposing side of the base layer. The sheet material can be adhered to an article and processed at high temperature whereby the ink-receptive layer and pressure-sensitive adhesive layer decompose (volatilize) and disappear, and the marking and the base layer cohere into a single burned mass to form a burned pattern adhered to the article. The sheet material can be used to form an identification label, a decorative pattern, and the like, on an article.

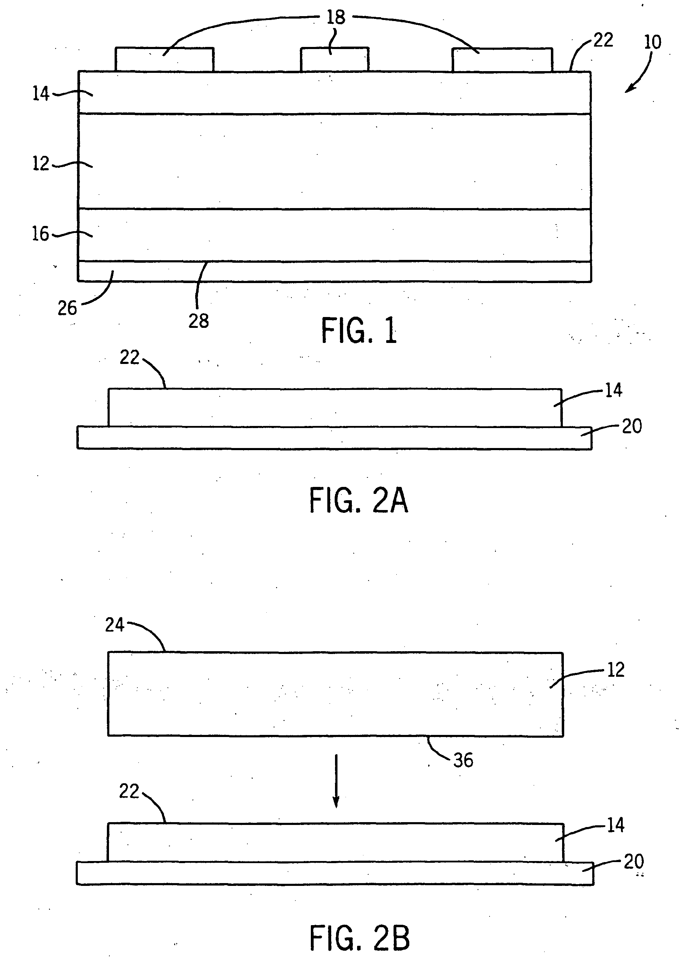

**FIG. 1** illustrates a sheet material 10 for a label according to an embodiment of the invention. The sheet material 10 comprises a base layer 12, an ink-receptive layer 14, a pressure-sensitive adhesive layer 16, and a pattern or marking 18 on the ink-receptive layer 14.

The base layer 12 is fabricated from heat-resistant materials that are not burned off during the heat treatment (firing) to form the label. Preferably, the materials are non-thermally (non-heat) decomposable at temperatures up to about 500°C. The base layer 12 provides the sheet material 10 with structural strength and support for the other components of the sheet material 10 prior to the heat treatment. Preferably, after exposure to the heating (firing) temperature, the base layer 12 does not significantly char, outgas, shrink or otherwise change so as to adversely affect or alter its initial character.

The base layer 12 is composed of a reinforcing material that is saturated with a composition comprising silicone resins and inorganic particles. Examples of reinforcing materials include glass, ceramic, metal, and the like. A preferred reinforcing material for the base layer 12 is a woven cloth of fiberglass (glass fiber), generally having a thickness of about 20-75 µm, preferably about 25-50 µm.

The reinforcing material is saturated with a composition comprising a mixture of silicone resins and inorganic particles. The silicone resins function as a binder to coat and fill spaces in the reinforcing material (e.g., woven cloth). The silicone resins also function as a high temperature adhesive since the silicone resins undergo a so-called sol-gel process when a suitably high temperature is applied, forming a ceramic structure on the substrate being labeled.

Exemplary silicone resins include straight type silicone resins such as polyorganosiloxanes, for example, polymethylsiloxane, polyphenylsiloxane, polyphenylmethylsiloxane, and the like. Other examples of suitable silicone resins include alkyd-modified silicone resins, phenol-modified silicone resins, melamine-modified silicone resins, epoxy-modified silicone resins, urethane-modified silicone resins, and the like. The silicone resins are dried and cured at about 100-200°C during production of the label material. The label is converted to a ceramic after being burned/baked at a higher temperature, for example, at about 300°C or higher.

The incorporation of inorganic particles into the reinforcing material also improves the heat resistance, and can provide a background color to the burned label. Although not a limiting factor, the inorganic particle diameter is generally about 50 µm or less, and preferably about 0.05-20 µm. Exemplary inorganic particles include inorganic powders such as a metal powder, a ceramic powder, etc. Examples of inorganic powders that can be used include powders of silica, alumina, titania, zirconia, zinc oxide, calcium oxide, mica, potassium titanate, aluminum borate, feldspar (Na₂O₃•Al₂O₃•3SiO₂), mullite (3Al₂O₃•3SiO2), kaolin (Al₂O₃•3SiO₂•2H₂O), and spodumene (Li₂• Al₂O₃•4SiO₂), and other white or off-white powders. Also useful are metal compounds such as metal carbonates, metal nitrates, metal sulfates, and the like, that oxidize to form a white ceramic, for example, calcium carbonate, barium sulfate, and the like. Additional examples of inorganic particles include dark-colored inorganic particles, for example, powders of manganese oxide, chromium oxide (chromate), selenium sulfide, cobalt oxide, vanadium oxide, and the like. Also useful is an inorganic powder that is adhered to mica or other such material to form a flaky powder, for opacifying strength and/or reflectivity, for example, titanium dioxide coated mica.

The silicone resin composition can be prepared by combining the silicone resin with the inorganic particles in a compatible organic solvent as desired, using a ball mill or the like. The composition can comprise about 5-70 parts by weight of the inorganic particles, preferably about 10-30 parts by weight, per 100 parts by weight of the silicone resin. Suitable solvents generally include, for example, toluene, xylene, ethyl acetate, methyl ethyl ketone, and the like. Known and used processing aids and additives such as dispersing agents, plasticizing agents, defoaming agents, among others, can be included in the composition as desired.

The silicone resin/organic particle composition can be applied to the reinforcing material by a suitable method, for example, by spreading the composition directly onto the reinforcing material using a doctor blade, a gravure roll coater, etc., to saturate the reinforcing material. The reinforcing material is then dried and cured under heat, generally at about 150-200°C to form the base layer 12.

Referring now to **FIG. 2A**, in production, the ink-receptive layer 14 can be formed on a release liner 20. Then, as depicted in **FIG. 2B**, the base layer 12 can be applied to the exposed surface 22 of the ink-receptive layer 14. The ink-receptive layer 14 is made of thermally decomposable organic material such that the layer 14 will decompose and disappear when the sheet material 10 is heated at a temperature of about 300°C or greater. Preferred materials for the ink-receptive layer 14 are acrylic-based resins (polymers) that bum off cleanly while the marking 18 is retained on the object, i.e., at the heating temperature. Preferred examples of acrylic-based resins include polymethyl methacrylate, polyethyl methacrylate, polybutyl methacryate, and copolymers of these polymers and acrylic acid. The thickness of the ink-receptive layer 14 is generally about 4-12 µm, and preferably about 6-8 µm. The release liner 20 protects the ink-receptive layer 14 on the sheet material until die-cutting takes place. The release liner 20 can be any type of liner having a coating that will release from the ink-receptive layer 14.

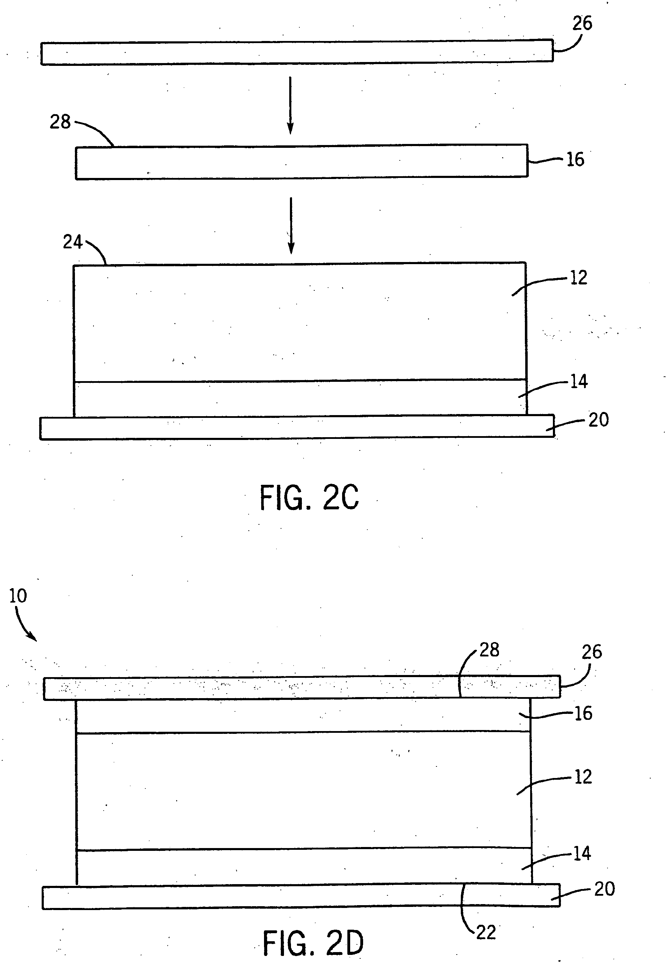

As shown in **FIG. 2C**, a pressure-sensitive adhesive material is then applied to the exposed surface 24 of the base layer 12 to form the adhesive layer 16, which functions to temporarily attach the sheet material 10 to an object at room ambient temperature of about 20-30°C. The adhesive layer 16 is composed of an organic material that will decompose and disappear by heating (burning) at a temperature of about 300°C or greater. To avoid discoloration of the label, the adhesive should not form any charred products. An acrylic-based pressure-sensitive adhesive is preferably used. Preferred acrylic adhesives are composed of a polymer of an alkyl ester of an acrylic acid or methacrylic acid as a main component.

The pressure-sensitive adhesive material can be applied onto the base layer 12 by conventional techniques. Preferably, as depicted in **FIG. 2C**, the adhesive layer 16 is coated directly onto the surface 24 of the base layer 12, for example, using an applicator such as a doctor blade, a roll coater, or the like, and a removable separator or liner sheet 26 is then applied to the exposed surface 28 of the adhesive layer 16, resulting in the sheet material 10 shown in **FIG. 2D**. The adhesive layer 16 can also be initially coated onto a liner sheet 26 by use of a coating machine, and then transferred onto the surface 24 of the base layer 12. The adhesive layer 16 is typically about 5-16 µm thick, more typically about 9-13 µm thick. The adhesive layer 16 can also be applied as a pattern of elements (e.g., dots, grid, lines, etc.) onto the surface of the base layer 12.

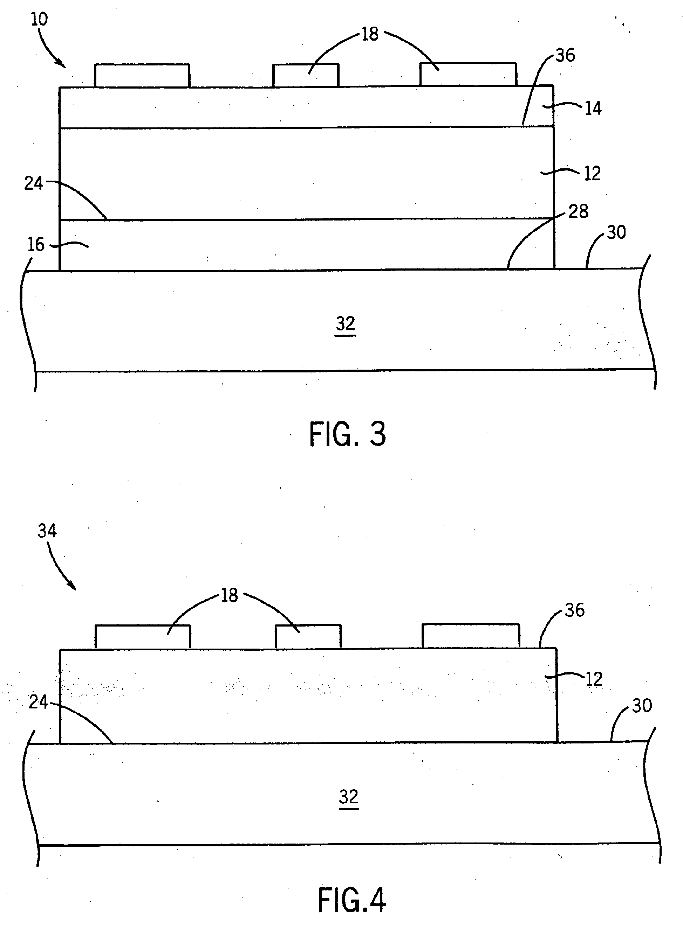

The releasable liner sheet 26 protects the surface 28 of the adhesive layer 16 until the sheet material 10 is attached to an object to be labeled. The liner sheet 26 can be any type of liner that has a coating that will release from the adhesive layer 16. The liner sheet 26 can be removed immediately prior to affixing the sheet material 10 to an object to be labeled, as shown in **FIG. 3**.

As illustrated in **FIG. 1**, the release liner 20 can be removed and a marking 18, typically comprising heat-resistant ink, then applied to the surface 22 of the ink-receptive layer 14. A heat-resistant ink can be prepared by known processes in the art, typically by mixing one or more inorganic coloring agents (colorants) with a compatible solvent, and with optional additives such as an organic binder, ceramic powder, plasticizer, and/or a dispersant, by use of a ball mill, etc. to prepare a flowable ink, typically in the form of a paste or liquid. The ink can be, for example, in a liquid form and packaged for use in ink-jet printing, used as a liquid for screen printing, packaged in dry form as a laser printer toner, or coated onto a film and dried along with other layers for thermal transfer printing. Examples of inorganic colorants for the ink include inorganic powders such as silica and mica, among others, inorganic pigments, carbon black, metal powders, metal oxides such as oxides of iron, nickel, chromium, cobalt, manganese, and copper, and dielectric substances. Examples of organic binders include waxes such as paraffinic waxes, camauba waxes, and natural waxes, among others, and resins such as silicone resins, polyamide resins, and the like. Examples of solvents include toluene, isopropanol, and the like.

The marking 18 can be directly printed upon a surface 30 of the ink-receptive layer 14 by printing techniques that are known and used in the art, including, for example, screen printing, dot-matrix, ink jet, laser printing, laser marking, and thermal transfer, among others. As an example, the marking 18 can be applied through a thermal transfer of carbon black onto the ink-receptive layer using a thermal transfer ribbon, which ribbons are commercially available. Examples of a marking 18 that can be applied to the ink-receptive layer include characters, images, design patterns, and bar code patterns, among others.

Referring now to **FIGS. 3-4**, in use, the liner sheet 26 is removed and the exposed surface 28 of the adhesive layer 16 of the sheet material 10 is adhered to the surface 30 of an object 32 to be labeled. The object 32 with the adhered sheet material 10 is then heated (baked) at a temperature of about 300°C up to about 500°C, preferably about 400°C or greater, and most preferably at about 400-450°C. The heat treatment effectively bums off the adhesive layer 16 and the ink-receptive layer 14, which completely decompose (volatilize) and disappear, while the marking 18 and the materials of the base layer 12 that are not decomposed remain, resulting in the label 34 depicted in **FIG. 4**, whereby the surface 24 of the base layer 12 is fused or burned onto the surface 30 of the object 32, and the heat-resistant marking 18 is fused to the surface 36 of the base layer 12.

In a preferred embodiment of the sheet material 10, both the ink-receptive layer 14 and pressure-sensitive adhesive layer 16 are composed of acrylic polymers that bum off cleanly at processing temperatures of greater than about 300°C, while the marking 18 is retained. Acrylic polymers undergo an unzip decomposition at a high temperature and are vaporized as monomers. The monomers can pass through the base layer 12 and the marking 18 without disrupting the label and the image. Both the ink-receptive layer 14 and the pressure-sensitive adhesive layer 16 leave no carbonized residue after the sheet material 10 is heat treated. The base layer 12 of the sheet material 10 fuses onto the object 30 being labeled (e.g., identified), and the marking 18 fuses onto the surface 36 of the base layer 12 after both the acrylic ink-receptive layer 14 and the acrylic pressure-sensitive adhesive 16 decompose and volatilize under high temperature. By utilizing a cleanly decomposable polymer as the ink-receptive layer 14, a marking 18 printed on an ink-receptive layer 14 can be retained even after the ink-receptive layer 14 cleanly decomposes and evaporates.

The label can be used in various applications, such as marking or decorating pottery, glassware, ceramics, metal products, including applying a bar code identification to an article.

The present invention is described in more detail by reference to the following examples, but it should be understood that the invention is not construed as being limited thereto. Unless otherwise indicated, all parts are by weight.

### EXAMPLE

A sheet material 10 for a label according to the invention was prepared on a coater. The materials used for fabricating the sheet material 10 were as follows:

| **Ingredient** | **Supplier** | **Parts (wt%)** |
|---|---|---|
| *Ink-receptive coating* | | |
| ELVACITE® 2008 acrylic resin (polymethylmethacrylate) | Lucite International | 13 |
| ELVACITE® 2041 acrylic resin (polymethylmethacrylate) | Lucite International | 13 |
| Toluene | Chemcentral | 37 |
| Methyl ethyl ketone | Chemcentral | 37 |

| *Glass cloth* | | |
|---|---|---|
| Style 106 fiberglass fabric | BGF Industries, Inc. | |

| *Topcoat (over the Glass Cloth)* | | |
|---|---|---|
| PSA 610 | General Silicones | 24.940 |
| PSA 6473A | General Silicones | 24.940 |
| Toluene | Chemcentral | 15.492 |
| Heptane | Chemcentral | 23.243 |
| CAB-O-SIL® TS-530 fumed silica | Cabot Corporation | 1.000 |
| MEARLIN® Silkwhite 9110W white pearlescent pigment | Engelhard Corp. | 9.974 |
| Bis(trimethoxysilane propyl) amine | Osi Specialties | 0.274 |
| Titanium(4)isopropoxide | Sigma-Aldrich | 0.137 |

| *Adhesive* | | |
|---|---|---|
| AROSET® PS-6242 acrylic pressure-sensitive adhesive | Ashland Chemical Co. | |

An evaluation of the labels fabricated from the sheet material 10 was conducted as follows.

### Evaluation 1: Simulate CRT Process

Six labels were printed with carbon-black ribbon and hand-applied onto a glass plate, which was subsequently cleaned with an acid wash, and heat processed as follows:
a) Ramped-up from 23°C to 450°C at a rate of 2°C/minute;
b) Maintained at 450°C for 45 minutes; and
c) Ramped-down to 23°C at a rate of 2°C/minute.

The labels fused onto the glass plate well, and no residues such as carbon black were left on the top of the labels or between the glass plate and the label. The image (barcode) was clear and labels remained securely in place after testing.

### Evaluation 2: Simulate Plasma TV Process

Six printed labels were hand-applied on a glass plate, which was subsequently heat processed as follows:
a) Ramped-up from 23°C to 410°C at a rate of 30°C/minute;
b) Maintained at 410°C for 3.5 hours;
c) Ramped-up to 450°C at a rate of 2°C/minute;
d) Maintained at 450°C for 6 hours;
e) Ramped-down to 410°C at a rate of 2°C/minute;
f) Maintained at 410°C for 12 hours; and
g) Ramped-down to 23°C at a rate of 25°C/minute.

The labels fused onto the glass plate well with no residues left on the labels. No label fell off the glass plate. However, the image (barcode) faded away, which indicated that, instead of printing with carbon black ribbon, a high temperature ribbon should be used for thermal transfer (THT) printing if the label is to be used under a high temperature such as 400°C or above, for an extended period of time.

### Evaluation 3: Image Quality

Carbon black ink ribbons R4900 and R6200 (Brady Worldwide) were used to print on the heat-resistant label (HRL) material. Below are test results showing the image quality on the HRL materials after being fired.

| **Ribbon** | | | |
|---|---|---|---|
| **Test conditions** | **Brady R4900 Image quality** | **Brady R6200 Image quality** | **Background color** |
| 300°C/5 hours | good | good | slightly brown |
| 300°C/10 hours | good | good | slightly brown |
| 350°C/2 hours | good | good | slightly brown |
| 400°C/2 hours | good | good | white |
| 450°C/1 hour | good | good | white |
| 450°C/2 hours | faded | faded | white |
| 500°C/1 hour | faded | faded | white |
| 500°C/2 hours | mostly faded away | all faded away | white |

The carbon black images were maintained on the labels up to 450°C for 1-2 hours, after which the image began to fade. Almost no image remained after the label was heat treated at 500°C for 2 hours. For an extended time at a higher temperature (i.e., greater than about 450°C), a heat resistant ribbon should be used. It is noted that below 400°C, the adhesive did not burn off clean, and there was a brown color remaining on the back of the labels.

### Evaluation 4: Simulation of application for labeling on a light bulb

Labels printed with a carbon-black ribbon were applied to light bulbs and heat processed as shown below.

| **Heating Time (hours at 300°C)** | **Adhesion** | **Appearance** |
|---|---|---|
| 1 | good | brown |
| 5 | good | light brown |
| 10 | good | off-white |
| 24 | good | white |

### Evaluation 5: Labeling a stainless steel substrate

Heat-resistant labels printed with a carbon-black ribbon were applied to stainless steel at a temperature of 300°C, maintained at that temperature for 15 minutes, and then quenched into a room temperature water bath. The label performed well on the substrate.

**Conclusion.** By using a cleanly decomposable polymer as the ink-receptive layer according to the invention, an image printed on an ink-receptive layer of a decomposable polymer can be retained even after the ink-receptive layer cleanly decomposes.

In compliance with the statute, the invention has been described in language more or less specific as to structural and methodical features. It is to be understood, however, that the invention is not limited to the specific features shown and described, since the means herein disclosed comprise preferred forms of putting the invention into effect.

## Claims

1. A sheet material for a label, comprising:
a heat-resistant base layer; and
a heat-decomposable ink-receptive layer over a surface of the base layer.

2. The sheet material of Claim 1, wherein the base layer comprises a reinforcing material, one or more silicone resins, and inorganic particles.

3. The sheet material of Claim 2, wherein the reinforcing material comprises fiberglass cloth.

4. The sheet material of Claim 1, wherein the ink-receptive layer comprises an acrylic-based polymer.

5. The sheet material of Claim 1, wherein the ink-receptive layer is decomposable at a temperature of greater than about 300°C.

6. The sheet material of Claim 1, further comprising: a heat-decomposable pressure-sensitive adhesive layer over another surface of the base layer.

7. The sheet material of Claim 6, wherein the pressure-sensitive adhesive layer comprises an acrylic-based polymer.

8. The sheet material of Claim 6, further comprising a release layer covering the pressure-sensitive adhesive layer.

9. The sheet material of Claim 1, further comprising: a heat-resistant marking on the ink-receptive layer.

10. The sheet material of Claim 9, wherein the marking comprises carbon black.

11. A sheet material, comprising:
a heat-resistant base layer;
a heat-decomposable ink-receptive layer over a surface of the base layer;
a heat-decomposable pressure-sensitive adhesive layer over another surface of the base layer; and
a heat-resistant marking on a surface of the ink-receptive layer.

12. A sheet material, comprising: a heat-resistant base layer sandwiched between a heat-decomposable ink-receptive layer and a heat-decomposable adhesive layer; the ink-receptive layer and the adhesive layer being decomposable upon exposure to a temperature greater than about 300°C.

13. A sheet material, comprising:
a base layer comprising non-thermally decomposable material; and
an ink-receptive layer over a surface of the base layer, consisting essentially of a thermally decomposable organic material.

14. A sheet material, comprising:
a base layer comprising non-thermally decomposable material; and
an ink-receptive layer over a surface of the base layer, comprising thermally decomposable organic material such that the ink-receptive layer decomposes when the sheet material is heated at a temperature greater than about 300°C.

15. A sheet material, comprising:
a base layer comprising non-heat decomposable material; and
a heat-decomposable ink-receptive layer over a surface of the base layer, comprising thermally decomposable organic material such that the ink-receptive layer substantially decomposes at a temperature greater than about 300°C.

16. A printing sheet, comprising:
a heat-resistant base layer comprising a reinforcing material, inorganic particles, and a silicone resin;
a heat-decomposable ink-receptive layer over a surface of the base layer, the ink-receptive layer comprising an acrylic-based polymer;
a heat-decomposable pressure-sensitive adhesive layer over another surface of the base layer, the adhesive layer comprising an acrylic-based polymer; and
a heat-resistant marking on a surface of the ink-receptive layer.

17. The printing sheet of Claim 16, wherein, upon heating, the ink-receptive layer and the adhesive layer decompose and volatize, and substantially no carbonized residue of said layers remains.

18. A printing sheet, comprising:
a non-heat decomposable base layer of an inorganic material;
a heat-decomposable ink-receptive layer of an organic material, over a surface of the base layer; and
a heat-decomposable adhesive layer of an organic material, over another surface of the base layer.

19. A printing sheet, comprising:
a base layer of a non-heat decomposable inorganic material;
an ink-receptive layer of a heat-decomposable organic material, over a surface of the base layer; and
a pressure-sensitive adhesive layer of a heat-decomposable organic material, over another surface of the base layer.

20. A method of producing a pattern on a substrate, comprising the steps of:
(a) adhering a sheet material to the substrate via a pressure-sensitive adhesive layer on the sheet material, the sheet material comprising:
a heat-resistant base layer;
a heat-decomposable ink-receptive layer over a surface of the base layer; and
the pressure-sensitive adhesive layer over another surface of the base layer, the adhesive layer being heat-decomposable; and
a heat-resistant marking on a surface of the ink-receptive layer;
(b) heating the sheet material and the substrate such that the ink-receptive layer and the adhesive layer decompose and the marking is adhered to the substrate.

21. The method of Claim 20, wherein the step of heating is at a temperature greater than about 300°C to about 500°C.

22. The method of Claim 20, wherein substantially no carbonized residue of the ink-receptive layer and the adhesive layer remains after the heating step.

23. A method of fabricating a sheet material for a label, comprising the steps:
applying a heat-decomposable ink-receptive layer onto a surface of a base layer comprising a reinforcing material layer, a silicone resin, and inorganic particles;
applying a heat-decomposable adhesive layer to an opposing surface of the base layer; and
applying a heat-resistant marking onto a surface of the ink-receptive layer.

24. The method of Claim 23, further comprising the step of applying a releasable sheet to an exposed surface of the adhesive layer.

25. The method of Claim 23, wherein the step of applying the adhesive layer comprises applying adhesive material onto the surface of the base layer.

26. The method of Claim 23, prior to the step of applying the adhesive layer, the step of forming the adhesive material on a release sheet.

27. The method of Claim 23, prior to the step of applying the ink-receptive layer, the step of forming the ink-receptive layer on a release liner; and
prior to the step of applying the marking, the step of removing the release liner from the ink-receptive layer.
